# EUROPÄISCHE PATENTSCHRIFT

(11) **EP 1 951 530 B1**
(45) Veröffentlichungstag und Bekanntmachung des Hinweises auf die Patenterteilung: **10.03.2010**
(21) Anmeldenummer: 07856201.4
(22) Anmeldetag: 20.11.2007
(51) Int. Cl.: B60B 3/04, B21D 53/30

(54) **FAHRZEUGRAD UND VERFAHREN ZU DESSEN HERSTELLUNG**
VEHICLE WHEEL AND METHOD FOR MANUFACTURING IT
ROUE DE VÉHICULE ET SON PROCÉDÉ DE FABRICATION

(30) Priorität: 23.11.2006 DE 102006055704
(43) Veröffentlichungstag der Anmeldung: 06.08.2008
(73) Patentinhaber: Hayes Lemmerz Holding GmbH, 53639 Königswinter (DE)
(72) Erfinder: KERMELK, Werner, 53804 Much (DE); AFELTRA, Umberto, 25064 Gussago (IT); FRIESE, Udo, 59227 Ahlen (DE); REH, Peter, 51570 Windeck (DE)
(74) Vertreter: Althaus, Arndt
(86) Internationale Anmeldenummer: PCT/EP2007/010031
(87) Internationale Veröffentlichungsnummer: WO 2008/061703

(56) Entgegenhaltungen:
- EP-A- 0 017 619
- CH-A5- 658 224
- DE-A1- 10 058 807
- DE-A1- 19 804 739
- DE-U1- 8 216 339
- JP-A- 60 151 102

## Beschreibung

Die Erfindung betrifft ein Fahrzeugrad, bestehend aus einer als Gussteil aus vorzugsweise Leichtmetall gefertigten Radschüssel mit konzentrisch um die Radachse umlaufendem Schüsselrand und einem vorzugsweise aus Stahl gefertigten, mit der Radschüssel drehfest verbundenen, wenigstens ein Felgenhorn, Felgenschulter, ein Felgentiefbett und eine Tiefbettflanke aufweisenden Felgenring zur Aufnahme eines Reifens an der Felgenringaußenseite. Die Erfindung betrifft auch ein Verfahren zum Herstellen eines solchen Hybridfahrzeugrades aus einer als Gussteil aus vorzugsweise Leichtmetall gefertigten Radschüssel und einem Felgenring aus vorzugsweise Stahl mit den Schritten Bereitstellen einer wenigstens ein Felgenhorn, eine Felgenschulter, ein Felgentiefbett und eine Tiefbettflanke aufweisenden Felgenringvorform und Bereitstellen einer Radschüssel, die einen konzentrisch um die Radachse umlaufenden Schüsselrand aufweist. Die Erfindung ist im Besonderen auf Fahrzeugräder für Kraftfahrzeuge, insbesondere Personenkraftwagen gerichtet.

Im Stand der Technik haben sich bei Fahrzeugrädern zum einen die klassischen Stahlfahrzeugräder durchgesetzt, die aus einem im Wesentlichen durch Umformverfahren in einer Fertigungsstraße hergestellten Stahl-Felgenring und einer in einer separaten Fertigungsstraße hergestellten Stahl-Radschüssel bestehen, die am Ende der Fertigungsstraßen miteinander zum Fahrzeugrad verschweißt werden. Felgenring und Radschüssel erhalten hierbei in der Fertigungsstraße jeweils ihre Endform, bevor sie miteinander verschweißt werden.

Darüber hinaus haben sich im Stand der Technik Leichtmetallräder, insbesondere aus Aluminium, durchgesetzt, die z.B. als einteilige Gusskonstruktionen oder als Schmiederäder hergestellt werden. Bei mehrteiligen Leichtmetallrädern wird eine gegossene oder geschmiedete Radschüssel mit einer mittels Profilrollen oder Fliesdrücken hergestellten Felge aus Aluminiumband verbunden. Die Verbindung kann entweder über lösbare Schraubverbindungen bewirkt werden oder aus einer Schweißung bestehen.

Aus der DE 100 58 807 A1 ist es bekannt, bei einem Hybridfahrzeugrad, bei welchem Radschüssel und Felgenring aus unterschiedlichen Werkstoffen gefertigt sind, Radschüssel und Felgenring durch Reibschweißen miteinander zu verbinden. Aus der DE 198 04 739 A1 ist es beispielsweise bekannt, bei einer aus Leichtmetall gefertigten Radschüssel das äußere Felgenhorn integral an der Schüssel vorzusehen, und im Bereich der äußeren Felgenschulter einen Anschweißfortsatz an der Radschüssel auszubilden, an der dann ein entsprechend ohne das äußere Felgenhorn ausgebildeter Felgenring durch eine Reibschweißung befestigt wird.

Ein gattungsgemäßes Fahrzeugrad ist aus der DE 82 16 339 U1 bekannt. Bei diesem Fahrzeugrad wird eine Radschüssel als Gussteil hergestellt, auf die ein sämtliche Elemente einer Radfelge aufweisender Felgenring durch Aufschrumpfen aufgezogen wird. Durch das Aufschrumpfen soll zwischen dem Felgenring und der an der Felgenringinnenseite der Felgenschulter mit seinem Umfangsrand anliegenden Radschüssel ein Presssitz erreicht werden, der Radschüssel und Felgenring drehfest miteinander verbindet. Um die Reibung im Presssitz zwischen dem Felgenring und der Radschüssel zu erhöhen, können in die einander zugewandten Flächen körniges Material, Vorsprünge oder ein hitzebeständiger Klebelack eingebracht sein. Der Felgenring muss im Bereich der Felgenschulter, die an der Ringaußenseite bei Fahrzeugrädern eine Schrägstellung von etwa 5° und bei Nutzfahrzeugrädern (Steilschulterrädern) eine Schrägstellung von etwa 15° aufweist, mit einer zusätzlichen Materialverdickung versehen werden, damit sich der Felgenring an der Ringinnenseite von der Tiefbettflanke zur Radaußenseite im Durchmesser konisch verjüngen kann. Um den Felgenring auf die Radschüssel aufschrumpfen zu können, muss der Felgenring auf Temperaturen oberhalb 300° erhitzt werden, was energetisch äußerst aufwendig ist und hohe Fertigungskosten bewirkt. Weitere Nachteile neben den hohen Fertigungskosten sind, dass die hohen aufzubringenden Temperaturen Materialveränderungen in dem vorzugsweise umgeformten Felgenring hervorrufen können und außerdem ein Korrosionsschutz, der vor dem Zusammenfügen an nachher nicht mehr zugänglichen Fügestellen aufgebracht wurde, durch die hohen Temperaturen zerstört wird, so dass das durch Aufschrumpfen gefertigte Fahrzeugrad insbesondere an den Fügestellen einer starken Korrosionsanfälligkeit unterliegt.

JP 60 151102 A und CH 658224 A5 zeigen ähnliche Fahrzeugräder.

Aufgabe der Erfindung ist es, ein Fahrzeugrad, insbesondere ein Hybridfahrzeugrad, sowie ein Verfahren zu dessen Herstellung zu schaffen, das mit geringem Aufwand herstellbar ist, die vorgenannten Nachteile des Aufschrumpfens vermeidet und gleichzeitig einen ausreichenden Kraftfluss zwischen Felgenring und Radschüssel gewährleistet, der den hohen Umfangskräften aus den Brems- und Beschleunigungsmomenten im Einsatz des Fahrzeugsrades mit der notwendigen Sicherheit entgegenwirkt.

Diese sowie weitere Aufgaben werden erfindungsgemäß beim Fahrzeug nach Anspruch 1 dadurch gelöst, dass die Radschüssel am Schüsselrand eine an den Verlauf von Felgenhorn und Tiefbettflanke angepasste und sich über deren Abstand erstreckende Kontur aufweist, an welcher der Felgenring im Montagezustand von Radschüssel und Felgenring unter Einklemmen der Radschüssel zwischen einer ersten Druckzone an der Tiefbettflanke und einer zweiten Druckzone am Felgenhorn anliegt.
Bei dem erfindungsgemäßen Fahrzeugrad wird mithin der Felgenring an der Radschüssel festgeklemmt, indem am Schüsselrand der Radschüssel zwei entgegengesetzt liegende Flächen oder Zonen geschaffen werden, gegen die einerseits das Felgenhorn und andererseits die Tiefbettflanke des Felgenrings derart unter Druck anliegen können, dass über eine Klemmung ein ausreichender Kraftschluss zwischen Radschüssel und Felgenring erreicht wird. Da die Radschüssel als Gußteil gebildet bzw. hergestellt werden kann, kann sie im Prinzip jedes geeignete bzw.. gewünschte Styling erhalten.

Bei der bevorzugten Ausgestaltung eines erfindungsgemäßen Fahrzeugrades ist zwischen den beiden Druckzonen eine zusätzliche Anlagezone am Übergang der.Tiefbettflanke zur Felgenschulter ausgebildet. Diese zusätzliche Anlagezone kann vorrangig dazu dienen, die Radialkräfte, die im Fahrbetrieb auf das Fahrzeugrad ausgeübt werden, z.B. die Gewichtskräfte des Fahrzeuges, aufzunehmen, während die beiden Druckzonen vorrangig dem Kraftschluss durch Einklemmen der Radschüssel an der Innenseite des Felgenrings dienen. Besonders vorteilhaft ist, wenn die Anlagezone mittels eines Sicherheitshumps am Felgenring und eines an dessen Innenseite anliegenden, umlaufenden Stütznockens am Schüsselrand gebildet sind. Es versteht sich, dass der entsprechende Stütznocken am Schüsselteil vorzugsweise bereits beim Gießen, mithin Urformen der Radschüssel, ausgebildet wird. Im Montagezustand stützt sich der Felgenring vorzugsweise an der Anlagezone im Wesentlichen nur in Radialrichtung am Schüsselrand bzw. am Stütznocken ab.

Das Aufziehen des Felgenrings auf den Schüsselrand der Radschüssel erfolgt nicht, wie im Stand der Technik, durch Aufschrumpfen, sondern vorzugsweise erfindungsgemäß dadurch, dass der Felgenring durch Aufstauchen und/oder Aufrollen am Schüsselrand angeklemmt wird. Hierbei ist besonders vorteilhaft, wenn im Montagezustand zwischen der Anlagezone am Sicherheitshump und der zweiten Druckzone am Felgenhorn keine oder zumindest partiell keine unmittelbaren Kontaktflächen zwischen Felgenring und Schüsselumfang bestehen. Im Montagezustand des fertigen Fahrzeugrades ist mithin besonders vorteilhaft, wenn die Felgenringinnenseite vom Schüsselrand zwischen den Druck- und Anlagezonen um einen Spalt beabstandet ist. Der Spalt bzw. die fehlenden unmittelbaren Kontaktstellen ermöglichen besonders gut, dass beim Aufstauchen oder Aufrollen des Felgenrings bzw. einer Felgenringvorform eine Überdehnung bzw. zusätzliche Streckung der Felgenschulter zur Radachse hin erfolgen kann, durch die eine Klemmkraft aufgebracht wird, die nach Entspannen des Aufstauchwerkzeugs oder nach Außerkontaktbringen des Aufrollwerkzeugs einer materialbedingten Rückfederung bzw. Rückstellung des Materials des Felgenrings entgegenwirken. Hierzu kann die Kontur des Schüsselrandes am Felgenschulterabschnitt insbesondere eine Einziehung aufweisen. Gemäß einer vorteilhaften Ausgestaltung eines insbesondere durch Auftauchen hergestellten Fahrzeugrades kann die Einziehung im Montagezustand von Felgenring und Schüsselrand den größten Abstand zwischen diesen Teilflächen bewirken. Die Einziehung kann zugleich zur Gewichtsminderung des fertigen Fahrzeugrades beitragen, da in diesem Bereich kein Kontakt zwischen Felgenring und Schüsselrand bestehen sollte, um die Klemmung definiert zwischen den Druckzonen aufbringen zu können und eine Überbestimmung zu vermeiden. Bei einer alternativen Ausgestaltung eines vorteilhafterweise durch Aufrollen hergestellten Fahrzeugrades kann die Kontur des Schüsselrands am Felgenschulterabschnitt mit wenigstens einer umlaufenden Rille versehen sein, in die beim Aufrollen der Felgenring partiell hineingedrückt ist oder wird, um durch die nutförmigen Rillen und das in diese hineingedrückte Material des Felgenrings einen zusätzlichen, insbesondere formschlüssigen Verdrehschutz zu erreichen. Besonders vorteilhaft ist, wenn die eine Rille oder wenn mehrere Rillen umlaufend oder schraubenlinienförmig umlaufend am Umfang des Felgenschulterabschnitts ausgebildet ist/sind.

Gemäß einem Ausführungsbeispiel können am Übergang des Felgenhorns in die Felgenschulter der Felgenring und die Kontur des Schüsselrands Übergangsabschnitte aufweisen, an denen eine dritte Druckzone ausgebildet ist. Mit dieser dritten Druckzone kann erreicht werden, dass zum einen eine Klemmung zwischen der ersten und dritten Druckzone und des weiteren eine Klemmung zwischen der zweiten und der dritten Druckzone bewirkt wird, ohne dass eine Überbestimmung auftritt, wobei weiterhin die Überdehnung des Fahrzeugrades im Bereich der Felgenschulter aufgebracht werden kann, um die Klemmung an den beiden Druckzonenpaaren zu erreichen. Bei einem alternativen Ausführungsbeispiel kann die dritte Druckzone entfallen und am Übergang des Felgenhorns in die Felgenschulter weisen der Felgenring und die Kontur des Schüsselrandes wiederum Übergangsabschnitte auf, die normal zur Radachse ausgerichtet sind oder eine Abwinklung >90° aufweisen. Beim Aufstauchen oder Aufrollen können mithin in diesen Bereichen keine Kräfte übertragende Anlagestelle oder Druckzonen entstehen.

Bei sämtlichen Ausgestaltungen eines erfindungsgemäßen Fahrzeugrades ist besonders vorteilhaft, wenn der Felgenring an dem Ende, welches das am Schüsselrand anliegende Felgenhorn bildet, im Wesentlichen normal zur Radachse umgebogen ist und/oder wenn die Kontur des Schüsselrands am Felgenhornabschnitt Einbuchtungen mit einer vorzugsweise normal zur Radachse ausgerichteten Anlagefläche aufweist. Der Felgenhornabschnitt am Schüsselrand dient hierbei zum Ausbilden der Druckzone zusammen mit der Innenseite des aufgestauchten und/oder aufgerollten und hierbei umgebogenen äußeren Felgenhorns. Beim montierten Fahrzeugrad weist die Einbuchtung am Felgenhorn zur Radaußenseite, damit sie dem Übergangsabschnitt bzw. dem Tiefbettflankenabschnitt am Schüsselrand entgegengesetzt liegt, um die Klemmung zwischen der ersten und zweiten bzw. der ersten und dritten sowie der zweiten und dritten Druckzone bewirken zu können.

Die erste Druckzone kann vorteilhafter Weise am oder nahe des Übergangsstücks der Tiefbettflanke in den Tiefbettboden angeordnet sein. Die erste Druckzone kann hierbei radial fluchtend oder mit geringem axialen Versatz zur Nabenanschlussfläche am Fahrzeugrad angeordnet sein, um eine vorteilhafte Momentabstützung zu erreichen. Es sind, jedoch auch andere Ausgestaltungen möglich.

Der Tiefbettflankenabschnitt am Schüsselrand kann um etwa 55° bis 65°, vorzugsweise etwa 62° ± 3° zur Radachse abgewinkelt verlaufen und/oder die Tiefbettflanke am Felgenring kann vorzugsweise um wenigstens 1-2°, vorzugsweise etwa 5° ± 3° steiler verlaufen als der Tiefbettflankenabschnitt am Schüsselrand, um eine definierte Druckzone zu bilden, in der ausreichend hohe Klemmkräfte aufgebracht werden können.

Bei sämtlichen Ausgestaltungen ist besonders vorteilhaft, wenn der Felgenring einteilig, insbesondere aus einem umgeformten Stahlblech, ausgebildet ist und bereits als Felgenringvorform beide Felgenhörner, beide Felgenschulter, das Felgentiefbett und beide Tiefbettflanken sowie gegebenenfalls den Sicherheitshump erhält bzw. aufweist, wobei diese Felgenringvorform beim Aufstauchen oder Aufrollen im Wesentlichen nur noch im Bereich der Kontur des Schüsselrandes zu seiner Fertigform umgeformt wird. Zwischen dem Felgenring und der Radschüssel, insbesondere im Bereich der Druckzonen und Anlagezonen, können Klebemittel und/oder Dichtmittel zur Abdichtung oder als Korrosionsschutz eingesetzt sein.

Die vorgenannten Aufgaben werden bei dem Verfahren zum Herstellen des Hybridfahrzeugrades gemäß der in Anspruch 19 angegebenen Erfindung dadurch gelöst, dass die Radschüssel am Schüsselrand eine an den Verlauf von Felgenhorn und Tiefbettflanke angepasste und sich über deren Abstand erstreckende Kontur aufweist, und dass die Felgenringvorform mittels wenigstens eines Aufstauchschrittes und/oder Aufrollschrittes drehfest am Schüsselrand befestigt wird, wobei zum Einklemmen der Radschüssel eine erste Druckzone zwischen Felgenring und Radschüssel an der Tiefbettflanke und wenigstens eine zweite Druckzone zwischen Felgenring und Radschüssel am Felgenhorn gebildet wird.

Um ausreichend Klemmkräfte aufbringen zu können, ist besonders vorteilhaft, wenn die Radschüssel zumindest im Felgenschulterabschnitt mit einer Einziehung versehen ist, in welche die Felgenschulter des Felgenrings bzw. der Felgenringvorform beim Aufstauchen oder Aufrollen zum Ausgleich der auftretenden Rückfederung zumindest partiell hineingedrückt wird. Das Aufstauchen kann insbesondere mittels mehrbackiger Auf.stauchwerkzeuge erfolgen, wobei vorzugsweise jede Stauchbacke im Wesentlichen eine Negativform des fertigen Felgenrings aufweist. Hierbei ist besonders vorteilhaft, wenn die Negativform im Bereich der Felgenschulter eine Überstreckung der Felgenringvorform zur Radachse hin bewirkt, über die relativ hohe Klemmkräfte an den Druckzonen erreicht werden können. Das Aufrollen kann mit einer, ggf. auch mit mehreren Druckrollen erfolgen. Gemäß einer vorteilhaften Ausgestaltung kann der Anstellwinkel der Druckrolle/n relativ zur Radachse verstellbar sein bzw. während des Aufrollschrittes verstellt werden. Auch eine Kombination von Aufstauchen und Aufrollen kann vorteilhaft eingesetzt werden, um in den unterschiedlichen Druckzonen eine optimierte Verbindung zwischen Radschüssel und Felgenring zu erreichen.

Auch beim erfindungsgemäßen Verfahren können entweder nur zwei Druckzonen aufgebracht werden oder es wird eine dritte Druckzone am Übergangsabschnitt des Felgenhorns in die Felgenschulter ausgebildet. Weiter vorteilhaft ist, wenn beim Aufstauchen eine Anlagezone am Übergangsabschnitt zwischen Felgenschulter und Tiefbettflanke gebildet wird, wobei vorzugsweise der Felgenring nur an zwei oder drei Druckzonen und an der Anlagezone in Kontakt mit dem Schüsselrand der Radschüssel gedrückt bzw. gestaucht wird.

Da das Aufziehen des Felgenrings auf die Radschüssel im Wesentlichen ohne Wärmeanwendung erfolgt, kann besonders vorteilhaft beim erfindungsgemäßen Verfahren der Stahlfelgenring und/oder die Leichtmetallradschüssel mit einer Elektrotauchgrundierung oder einer korrosionsmindernden Grundierung vor dem Aufstauchen vorbehandelt werden, die auch beim montierten Fahrzeugrad ihre korrosionsmindernden Eigenschaften im Wesentlichen vollständig beibehält.

Weitere Vorteile und Ausgestaltungen des erfindungsgemäßen Fahrzeugrades sowie des hierzu eingesetzten Herstellungsverfahrens ergeben sich aus der nachfolgenden Beschreibung von schematisch in der Zeichnung gezeigten Ausführungsbeispielen. In der Zeichnung zeigen:
- Fig. 1: schematisch ein erfindungsgemäßes Fahrzeugrad im Längsschnitt, teilweise aufgebrochen;
- Fig. 2: schematisch in einer vergrößerten Darstellung den Ausschnitt gemäß II in Fig. 1 mit einer Felgenringvorform sowie dem Werkzeug zum Herstellen der Felgenringendform am Schüsselrand;
- Fig. 3: schematisch in einer Darstellung ähnlich zu Fig. 2 die Fügestelle bei einem Fahrzeugrad gemäß einem zweiten Ausführungsbeispiel; und
- Fig. 4: schematisch in einer Darstellung ähnlich zu Fig. 2 das Verbinden von Felgenringvorform und Schüsselrand durch Aufrollen bei einem Fahrzeugrad gemäß einem dritten Ausführungsbeispiel.

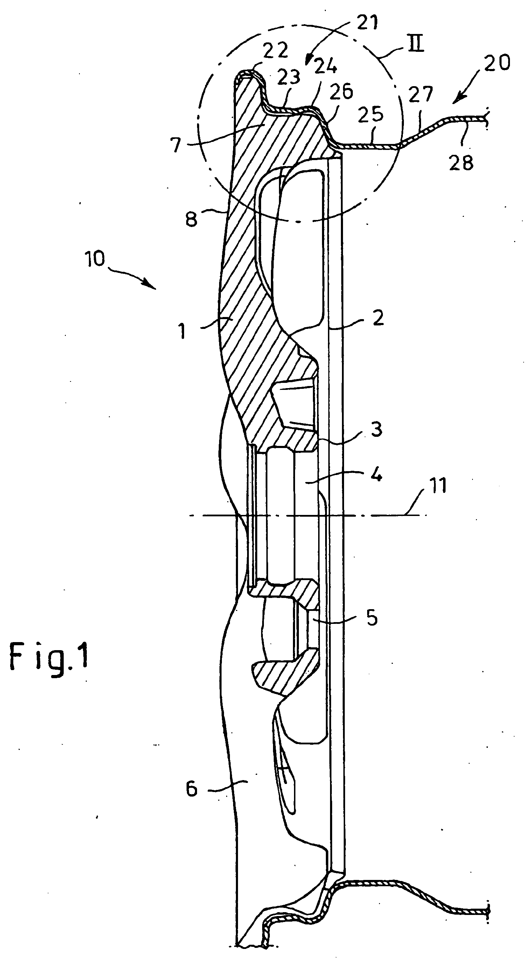

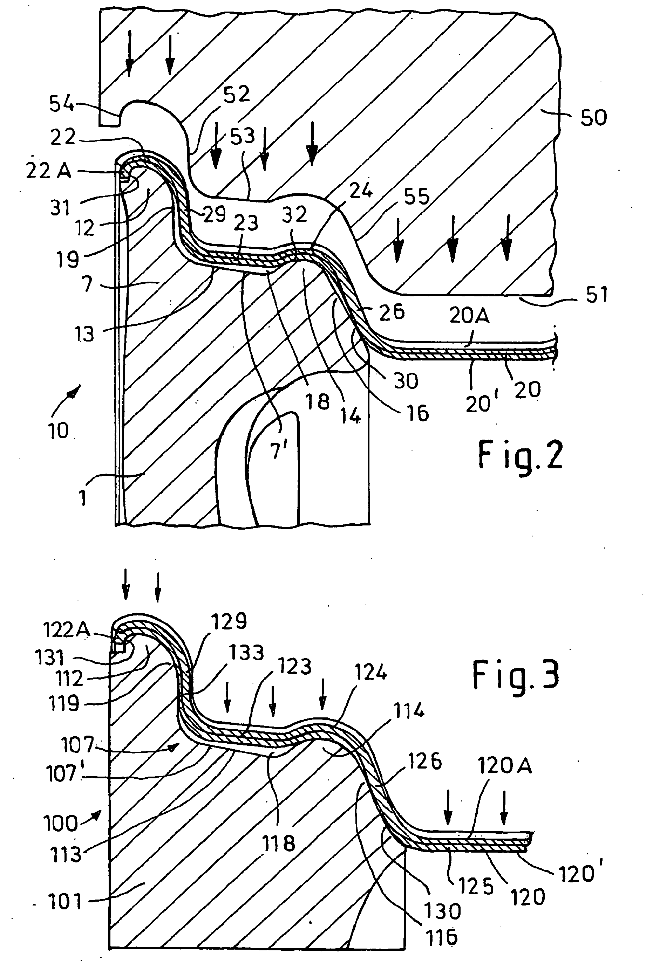

In den Fig. 1 und 2 ist mit Bezugszeichen 10 ein erfindungsgemäßes Fahrzeugrad bezeichnet, welches im Wesentlichen aus einer Radschüssel 1 und einem drehfest mit dieser verbundenen Felgenring 20 besteht. Das erfindungsgemäße Fahrzeugrad 10 ist als Hybridfahrzeugrad ausgeführt, bei welchem die Radschüssel 1 aus einem Gussteil aus Leichtmetall wie insbesondere Aluminium besteht, während der Felgenring 20 durch Umformen eines blechförmigen Stahlwerkstoffes zu einer Ronde und z.B. anschließendem Ausrollen eines runden Felgenrings 20 mit den felgenringspezifischen Merkmalen hergestellt wird. Die in Fig. 1 nur beispielhaft dargestellte Radschüssel 1 umfasst in an sich bekannter Weise an ihrer im Betriebseinsatz dem Fahrzeug bzw. der Fahrzeugnabe zugewandten Rückseite 2 eine Nabenanschlussfläche 3 mit einem zentralen Naben- oder Mittenloch 4 sowie mehrere gleichmäßig um die Radachse 11 verteilt angeordnete Bolzenlöcher 5, durch die hindurch die Radschüssel 1 an der Fahrzeugnabe angeschraubt werden kann. Die Radschüssel 1 weist geeignete Lüftungslöcher 6 auf und kann im Wesentlichen jegliches geeignete oder gewünschte Styling eines im Gießverfahren herstellbaren Fahrzeugrades erhalten. Da die Radschüssel als Gussteil hergestellt wird, sind dem Design dieser Radschüssel im Wesentlichen kaum Grenzen gesetzt.

Um nun mit dem Fahrzeugrad 10 einen Reifen abstützen zu können, über den sich ein Fahrzeug auf der Straße abrollend fortbewegen kann, ist der Felgenring 20 am äußeren Felgenringende 21 fest mit dem umlaufend um die Radachse 11 ausgebildeten Schüsselrand 7 verbunden. Wie Fig. 1 gut erkennen lässt, ist der Schüsselrand 7 relativ kräftig ausgebildet und er erstreckt sich im gezeigten Ausführungsbeispiel geringfügig zur Radinnenseite über die Nabenanschlussfläche 3 hinaus, um - wie noch erläutert wird - am Schüsselrand 7 den Felgenring 20 durch wenigstens einen Stauchschritt festzuklemmen.

Der in sämtlichen Figuren jeweils nur teilweise dargestellte Felgenring 20 weist ein äußeres Felgenhorn 22, eine äußere Felgenschulter 23, einen Sicherheitshump 24, ein Felgentiefbett 25 mit einer äußeren Tiefbettflanke 26 sowie einer inneren Tiefbettflanke 27, einen gegebenenfalls abgestreckten Bereich 28 sowie hieran anschließend wiederum wenigstens eine Felgenschulter sowie ein inneres Felgenhorn auf, die allerdings nicht dargestellt sind. Um den Felgenring 20 durch Aufstauchung fest am Schüsselrand 7 zu verankern, erstreckt sich der Schüsselrand 7 ausgehend von der Schüsselaußenseite 8 bis an denjenigen Bereich heran, an welchem im Montagezustand der Boden des Felgentiefbetts 25 liegt. Der Schüsselrand 7 der Radschüssel 1 hat eine axiale Länge, die sich zumindest über den Abstand zwischen Felgenhorn 22 und äußerer Tiefbettflanke 26 des Felgenrings 20 erstreckt.

Zur zusätzlichen Verdeutlichung des Aufstauchprozesses wird nun auf Fig. 2 Bezug genommen, in der von der Radschüssel 1 im Wesentlichen nur der kräftige Schüsselrand 7 in einer Schnittansicht dargestellt ist. In Fig. 2 ist der durch eine Stauchung bereits drehfest am Schüsselrand 7 verankerte Felgenring 20 mit Schraffur und die noch nicht verankerte Felgenringvorform 20A ohne Schraffur dargestellt. Wie Fig. 2 gut erkennen lässt, weist der Schüsselrand 7 an seinem Umfangsrand eine Kontur 7' auf, die im Wesentlichen an die Formgebung des Felgenrings 20 zwischen dem äußeren Felgenhorn 22 und der äußeren Tiefbettflanke 26 angepasst ist. Der Schüsselrand 7 umfasst entsprechend einen Felgenhornabschnitt 12, einen Felgenschulterabschnitt 13, einen umlaufenden Nocken 14 und einen Tiefbettflankenabschnitt 16, die jeweils dem Felgenhorn 22, der Felgenschulter 23, dem Sicherheitshump 24 bzw. der Tiefbettflanke 26 gegenüberliegen. Beim Aufstauchen der Felgenringvorform 20A auf den Schüsselrand 7 wird mittels mehrerer, umfangsverteilt um eine Radachse der Radschüssel 1 angeordneter, beispielsweise 12 entsprechend ausgebildeter Stauchbacken 50 eine partielle zusätzliche Verformung der Felgenringvorform 20A zum fertigen Felgenring 20 bewirkt. Jede Stauchbacke 50 weist hierbei an ihrer Innenseite 51 ein Profil auf, welches annähernd dem Negativprofil des Felgenrings 20 zwischen äußerem Felgenhorn 22 und Felgentiefbett 25 entspricht. Wie ein Vergleich der noch nicht mit den Stauchbacken 50 umgeformten Felgenringvorform 20A mit dem Felgenring 20 zeigt, wird erst beim Stauchen bzw. Aufstauchen ein partieller unmittelbarer Kontakt zwischen dem·Schüsselrand 7 und dem Felgenring 20 erzeugt. Dieser Kontakt besteht hierbei erfindungsgemäß nicht über die gesamte Kontur 7' des Schüsselrandes 7, sondern nur lokal an in Fig. 2 drei voneinander beabstandeten Stellen 30, 31, 32. Beim Stauchen werden hierbei beim Ausführungsbeispiel des Fahrzeugrades 10 in Fig. 2 zwischen dem Felgenring 20 und dem Schüsselrand 7 bzw. dessen Kontur 7' zwei Druckzonen oder Druckstellen ausgebildet, mittels denen der Schüsselrand 7 zwischen diesen beiden Druckzonen eingeklemmt wird. Die erste Druckzone befindet sich an der Schüsselrückseite an der mit Bezugszeichen 30 bezeichneten ersten Kontaktstelle zwischen der Tiefbettflanke 26 und dem Tiefbettflankenabschnitt 16 und eine zweite Druckzone besteht an der mit Bezugszeichen 31 bezeichneten Stelle zwischen dem Felgenhorn 22 und dem Felgenhornabschnitt 12 an der Außenseite des Felgenhornabschnitts 12. Da jeweils die Kraftresultierende an den Druckzonen 30, 31 in Axialrichtung wirken und aufeinander zu gerichtet sind, kann über die beiden Druckzonen 30, 31 eine Klemmkraft aufgebracht werden, die ausreicht, den Felgenring 20 und die Radschüssel 1 mit ausreichendem Kraftschluss zu verklemmen, so dass selbst die beim Bremsen und beim Beschleunigen auftretenden Momente keine Relativdrehung zwischen dem Felgenring 20 einerseits und der Radschüssel 1 andererseits bewirken.

Aus Fig. 2 ist ersichtlich, dass neben den beiden Druckzonen 30, 31 nur noch eine Anlagezone 32 im Bereich des Nockens 14 bzw. des Sicherheitshumps 24 besteht, wobei an dieser Stelle Druckkräfte bzw. Auflagekräfte ausschließlich in Radialrichtung und nicht in Axialrichtung wirken können. Die Klemmkraft an den Druckzonen 30 und 31 sowie im Bereich der Anlagezone 32 wird im Wesentlichen dadurch aufgebracht, dass die Felgenringvorform 20A im Bereich der Felgenschulter 23 eine radiale Deformierung zur Radachse hin erfährt, die über die eigentlich notwendige Deformierung hinausgeht. Hierzu ist bewusst eine ausreichend große Vertiefung oder Einziehung 18 im Bereich des Felgenschulterabschnitts 13 der Radschüssel 1 ausgebildet, in die beim Stauchen die Felgenringvorform 20A über die Endlage hinaus hineingedrückt werden kann, wodurch bewirkt wird, dass axial die beiden Druckzonen 30, 31 aufeinander zu bewegt werden und die Klemmkraft mithin erhöht wird. Um die Klemmkräfte über diese beiden Druckzonen 30, 31 aufzubringen, besteht daher jeweils zu beiden Seiten einer jeden Druckzone 30, 31 bzw. der Anlagezone 32 ein ausreichender Spaltabstand zwischen der Innenseite 20A des Felgenrings 20 und der Kontur 7' bzw. Außenseite der Radschüssel 7. Im Bereich des Übergangsabschnittes 29 zwischen dem Felgenhorn 22 und der Felgenschulter 23 sowie des entsprechenden Übergangsbereichs 19 an der Kontur 7' des Schüsselrandes 7 verlaufen diese Abschnitte daher jeweils senkrecht bzw. normal zur Radachse und auch die Stauchbacke 50 weist hier einen Abschnitt 52 auf, der ebenfalls senkrecht bzw. normal zur Radachse bzw. Drehachse der Radschüssel 1 ausgerichtet ist, so dass über diesen keine Streckungen in Radial- oder Axialrichtung aufgebracht werden können. Der an diesen Backenabschnitt anschließende Stirnabschnitt 53 der Stauchbacke 50 hingegen bewirkt beim Aufstauchen der Felgenringvorform 20A auf die Schüsselrandkontur 7' eine Überstreckung der Felgenschulter 23.

Eine vollständige Umgreifung des Felgenhornabschnitts 12 mittels des Endlappens 22A am Felgenhorn 22 wird über den Stauchbackenabschnitt 54 am in Fig. 2 linken Ende der Negativform der Stauchbacke 50 erreicht. Außerdem drückt die Stauchbackenflanke 55 die Felgenringvorform 20A im Wesentlichen im Krümmungsbereich zwischen der Felgentiefbettflanke 26 und dem Felgentiefbett 25 gegen den Tiefbettflankenabschnitt 16 am Schüsselrand 7. Die Stauchbackenflanke 55 ist hierbei etwa um einen Winkel von 62° bis 65° relativ zur Radachse abgewinkelt, während der Flankenabschnitt 16 am Schüsselrand 7 um etwa 3° weniger steil abgewinkelt steht, um eine definierte Druckzone 30 zu erreichen und zu bewirken, dass beiderseits der Druckzone 30 ein Spaltabstand zwischen der Innenseite 20' des Felgenrings 20 und der Oberfläche bzw. Außenseite des Schüsselrandes 7 besteht.

Bei dem in Fig. 3 schematisch gezeigten Fahrzeugrad 100 sind funktionsgleiche Bauteile bzw. Elemente wie beim vorherigen Ausführungsbeispiel mit um 100 erhöhten Bezugszeichen versehen. Auch beim Fahrzeugrad 100 ist eine Felgenringvorform 120A durch Aufstauchen am Schüsselrand 107 einer Radschüssel 101 verankert. Im Unterschied zum vorherigen Ausführungsbeispiel sind beim Fahrzeugrad 100 allerdings drei Druckzonen 130, 131 und 133 ausgebildet. Wie beim vorherigen Ausführungsbeispiel liegt die erste Druckzone 130 an der Anlagestelle der Tiefbettflanke 126 des Felgenrings 120 am Tiefbettflankenabschnitt 116 der Kontur 107' des Schüsselrands 107. Die zweite Druckstelle 131 ist zwischen der äußeren Flanke des Felgenhornabschnitts 112 und dem an diesen angedrückten Endlappen 122A des Felgenhorns 122 ausgebildet. Zwischen dem Nocken 114 und dem Sicherheitshump 124 ist ferner wie beim vorherigen Ausführungsbeispiel eine Anlagezone 132 für Radialkräfte ausgebildet. Die dritte, gegenüber dem vorherigen Ausführungsbeispiel zusätzliche Druckzone ist hier zwischen dem Schüsselübergangsabschnitt 119 am Übergang des Felgenhornabschnitts 112 in den Felgenschulterabschnitt 113 sowie dem am Schüsselübergangsabschnitt 119 anliegenden Übergangsabschnitt 129 des Felgenrings 120 ausgebildet. Die entgegengesetzt gerichteten Druckkräfte zwischen den Druckstellen 131 und 133 sowie 130 und 133 werden wiederum durch eine Überstauchung bzw. Überstreckung der Felgenschulter 123 in eine Einziehung 118 bzw. Vertiefung im Bereich des Felgenschulterabschnitts 113 der Radschüssel 101 erreicht, wobei auch beim Fahrzeugrad 100 jeweils zu beiden Seiten der Druckzonen 131, 130, 133 jeweils ein Spalt bzw. Zwischenraum zwischen der Innenseite 120' des Felgenrings 120 und der Außenfläche bzw. Kontur 107' des Schüsselrandes 107 ausgebildet ist. Der Spalt zu beiden Seiten der Druckzone 133 kann mit beispielsweise 0,2 bis 0,5 mm relativ gering ausfallen, wobei jedoch bei geeigneter Steifigkeit des Stahlmaterials für den Felgenring 120 auch entsprechend unterschiedliche Krümmungen des Schüsselübergangesabschnitts 119 und des Übergangsabschnitts 129 des Felgenrings 120 zur Aufbringung ausreichender Klemmkräfte ausreichen können.

Bei beiden vorgenannten Ausführungsbeispielen wird das Fahrzeugrad 10 bzw. 100 durch ein Verfahren hergestellt, bei welchem eine Felgenringvorform über wenigstens einen Stauchschritt mit umfangsverteilt angeordneten Stauchbacken, beispielsweise 12 Stauchbacken, auf den Schüsselrand einer als Gussteil ausgeführten Radschüssel aufgezogen wird. Vor dem Zusammenfügen von Felgenringvorform und Radschüssel durch Aufstauchen können beide Teile insbesondere an den im Montagezustand aneinanderliegenden bzw. nur durch einen geringen Spaltabstand voneinander beabstandeten Flächen an der Innenseite des Felgenrings bzw. der Felgenringvorform sowie der Außenseite des Schüsselrandes durch eine geeignete Grundierung, insbesondere eine Elektrotauchgrundierung gegen Korrosion geschützt werden, wobei diese Grundierung auch durch das Aufstauchverfahren nicht geschwächt oder beseitigt wird.

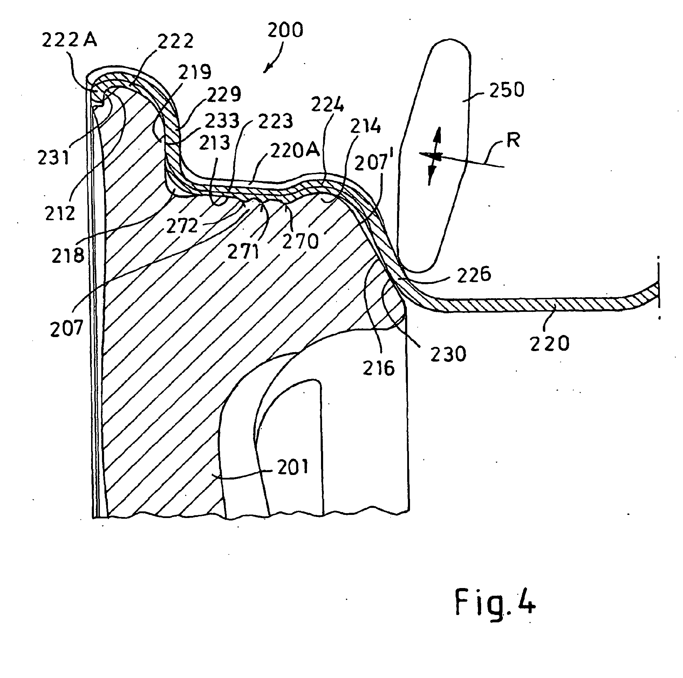

Auch bei dem in Fig. 4 schematisch gezeigten Fahrzeugrad 200 sind funktionsgleiche Partien an der Radschüssel 201 bzw. am Felgenring 220 wiederum mit um 100 erhöhten Bezugszeichen versehen. Anders als bei den vorherigen Ausführungsbeispielen wird beim Fahrzeugrad 200 eine Felgenringvorform 220A, die unschraffiert dargestellt ist, durch Aufrollen am Schüsselrand 207 der Radschüssel 201 verankert. Das Aufrollen findet vorzugsweise in mehreren Aufrollschritten durch Verformen der Felgenringvorform 220A zum Felgenring 220 über die gesamte Breite des Schüsselrandes 207 mittels hier einer Druckrolle 250 statt. Die Druckrolle 250 kann vorteilhafterweise, wie mit den Pfeilen angedeutet, parallel und quer zu ihrer Rollenachse R verstellt werden und weiter vorzugsweise ist auch der Anstellwinkel der Druckrolle 250 relativ zur Radachse verstellbar. Über den Umfang verteilt könnten auch mehrere Druckrollen zum Einsatz kommen, um durch simultane Bearbeitungen mehrerer Stellen zügig eine Verankerung des Felgenrings 220 am Schüsselrand 207 zu erreichen. Ähnlich wie bei der Ausgestaltung gemäß Fig. 2 werden auch hier zwischen dem Felgenring 220 und dem Schüsselrand 207 drei Druckzonen 230, 231 und 233 gebildet, wobei wenigstens eine, vorzugsweise sämtliche Druckzonen 230, 231 und 233 durch Aufrollen, und nicht durch Aufstauchen wie bei den vorherigen Ausführungsbeispielen, erzeugt werden. Die erste Druckzone 230 befindet sich wiederum an der Kontaktzone der Tiefbettflanke 226 des Felgenrings 220 mit dem Tiefbettflankenabschnitt 216 an der Kontur 207' des Schüsselrandes 207; die zweite Druckzone 231 wird zwischen der äußeren Flanke des Felgenhornabschnitts 212 und dem an diesen angedrückten Endlappen 222A des Felgenhorns 222 ausgebildet und die dritte Druckzone 233 wird zwischen dem Schüsselübergangsabschnitt 219 und dem Übergangsabschnitt 229 des Felgenrings 220 ausgebildet. Abweichend vom vorherigen Ausführungsbeispiel liegt beim Fahrzeugrad 200 die Felgenschulter 223 des Felgenrings 220 annähernd über ihre gesamte axiale Erstreckung am Felgenschulterabschnitt 213 der Radschüssel an. Im Übergangsbereich zwischen der dritten Druckzone 233 und dem Felgenschulterabschnitt 213 ist eine schmale Einziehung 218 bzw. Vertiefung am Schüsselrand 207 ausgebildet, in welchem der aufgerollte Felgenringe 220 vom Schüsselrand 207 beabstandet ist. Der Felgenschulterabschnitt 213 des Schüsselrandes 207 ist, im Wesentlichen angrenzend an den Nocken 214, gegen welchen der Sicherheitshump 224 des Felgenrings angedrückt wird, mit hier drei vorzugsweise jeweils um 360° umlaufenden Rillen 270, 271, 272 versehen, die auch aus einer schraubenlinienförmig sich zwischen Nocken 214 und Schüsselübergangsabschnitt 219 erstreckenden einzigen Rillen bestehen könnten. Beim Aufrollen der Felgenringvorform 220A auf die Kontur 207' mittels der Druckrolle 250 wird das Material des Felgenrings 220 zumindest partiell in die entsprechenden Rillen 270, 271, 272 hineingedrückt, so dass innerhalb der Rillen 270 bis 272 eine zusätzliche formschlüssige Verankerung und damit ein zusätzlicher Verdrehschutz zwischen Felgenring 220 und Radschüssel 201 bewirkt wird.

Für den Fachmann ergeben sich aus der vorhergehenden Beschreibung zahlreiche Modifikationen, die in den Schutzbereich der anhängenden Ansprüche fallen sollen. Bei den Ausführungsbeispielen verläuft der Felgenschulterabschnitt am Schüsselrand noch annähernd parallel und mit Abstand zur Felgenschulter des Felgenrings. Insbesondere dieser Bereich eignet sich besonders gut zur Anbringung von gewichtsminimierenden tieferen Einbuchtungen oder Aushöhlungen. Die Kontur des Schüsselrandes kann durch ein spanendes oder abtragendes Fertigungsverfahren noch an die gewünschten Funktionen angepasst werden, bevor die Grundierung und das Aufstauchen des Felgenrings erfolgt. Bei einem PKW-Fahrzeugrad hat die Felgenschulter vorzugsweise eine Abwinklung von etwa 5° zur Radachse. Insbesondere bei kleineren Fahrzeugrädern könnte die Felgenschulter allerdings auch als Steilschulter mit einer Abwinklung von etwa 15° ausgebildet sein. Das insbesondere bevorzugte Fahrzeugrad ist als Hybridrad mit einer Radschüssel aus Leichtmetall wie insbesondere Aluminium und einer Radschüssel aus Stahl oder Stahlblech gebildet. Grundsätzlich wäre es jedoch auch möglich, das Aufstauchen oder das Aufrollen bei materialgleichen Radschüsseln und Felgenringen vorzunehmen, die beispielsweise beide aus Leichtmetall oder beide aus Stahl bestehen. Das Aufrollen könnte auch mit einem oder mehreren Aufstauchschritten kombiniert werden. Auch die Fahrzeugräder gemäß den Fig. 1 bis 3 könnten ausschließlich durch Aufrollen erzeugt werden. Auch beim Aufrollen kann eine Einziehung mit Spalt im Bereich des Felgenschulterabschnitts, wie bei den vorherigen Ausführungsbeispielen beschrieben, erzeugt werden. Der Schüsselrand verläuft nur vorzugsweise umlaufend mit im wesentlichen konstanten Querschnitt. Der Schüsselrand könnte unter Umständen auch an sternförmigen Enden von Speichenstreben ausgebildet sein. In den Spalten zwischen Felgenring und Radschüsselrand könnte auch Kleber oder Dichtmittel eingebracht sein, um eine zusätzliche drehfeste Fixierung zu erreichen.

## Patentansprüche

1. Fahrzeugrad, bestehend aus einer als Gussteil aus Leichtmetall gefertigten Radschüssel mit konzentrisch um die Radachse umlaufendem Schüsselrand und einem aus Stahl gefertigten, mit der Radschüssel (1; 101) drehfest verbundenen, wenigstens ein Felgenhorn (22; 122), Felgenschulter (23; 123), ein Felgentiefbett (25; 125) und eine Tiefbettflanke (26; 126) aufweisenden Felgenring (20; 120), **dadurch gekennzeichnet, dass** die Radschüssel (1; 101) am Schüsselrand (7; 107) eine an den Verlauf von Felgenhorn (22; 122) und Tiefbettflanke (26; 126) angepasste und sich über deren Abstand erstreckende Kontur (7'; 107') aufweist, an der der Felgenring (20; 120) im Montagezustand von Radschüssel und Felgenring unter Einklemmen der Radschüssel (1; 101) zwischen einer ersten Druckzone (30; 130) an der Tiefbettflanke (26; 126) und einer zweiten Druckzone (31; 131) am Felgenhorn (22; 122) anliegt.

2. Fahrzeugrad nach Anspruch 1, **dadurch gekennzeichnet, dass** zwischen den beiden Druckzonen (30, 31; 130, 131) eine Anlagezone (32; 132) am Übergang der Tiefbettflanke zur Felgenschulter ausgebildet ist.

3. Fahrzeugrad nach Anspruch 2, **dadurch gekennzeichnet, dass** die Anlagezone (32; 132) mittels eines Sicherheitshumps (24; 124) am Felgenring und eines an dessen Innenseite anliegenden, umlaufenden Stütznockens (14; 114) am Schüsselrand (7; 107) gebildet sind, wobei vorzugsweise im Montagezustand zwischen der Anlagezone (32) am Sicherheitshump (14) und der zweiten Druckzone (31) am Felgenhorn (22) keine unmittelbaren Kontaktflächen zwischen Felgenring (20) und Schüsselrand (7) bestehen..

4. Fahrzeugrad nach Anspruch 2 oder 3, **dadurch gekennzeichnet, dass** sich der Felgenring (20; 120) an der Anlagezone (32; 132) im Wesentlichen nur in Radialrichtung am Schüsselrand (7; 107) abstützt.

5. Fahrzeugrad nach einem der Ansprüche 1 bis 4, **dadurch gekennzeichnet, dass** der Felgenring (20; 120; 220) durch Aufstauchen und/oder durch Aufrollen am Schüsselrand (7; 107; 207) der Radschüssel (1; 101; 201) angeklemmt ist.

6. Fahrzeugrad nach einem der Ansprüche 1 bis 5, **dadurch gekennzeichnet, dass** am Übergang des Felgenhorns (122) in die Felgenschulter (123) der Felgenring (120) und die Kontur (107') des Schüsselrands (107) Übergangsabschnitte (119; 129) aufweisen, an denen eine dritte Druckzone (133) ausgebildet ist, um eine Klemmung sowohl zwischen der ersten und der dritten Druckzone (130; 133) als auch zwischen der zweiten und der dritten Druckzone (131; 133) zu bewirken.

7. Fahrzeugrad nach einem der Ansprüche 1 bis 5, **dadurch gekennzeichnet, dass** am Übergang des Felgenhorns (22) in die Felgenschulter (23) der Felgenring (20) und die Kontur (7') des Schüsselrands (7) Übergangsabschnitte (19; 29) aufweisen, die normal zur Radachse (11) ausgerichtet sind oder eine Abwinklung > 90° aufweisen.

8. Fahrzeugrad nach einem der Ansprüche 1 bis 7, **dadurch gekennzeichnet, dass** die Kontur (7'; 107') des Schüsselrands am Felgenschulterabschnitt (13; 113) eine Einziehung aufweist, die vorzugsweise im Montagezustand den größten Abstand vom Felgenring (20; 120) aufweist, und/oder dass im Montagezustand die Ringinnenseite (20'; 120') vom Schüsselrand (7; 107) zwischen den Druck- und Anlagezonen (30, 31, 32, 33; 130, 131, 132, 133) um einen Spalt beabstandet ist.

9. Fahrzeugrad nach einem der Ansprüche 1 bis 7, **dadurch gekennzeichnet, dass** die Kontur (207') des Schüsselrands (207) am Felgenschulterabschnitt (213) mit wenigstens einer umlaufenden Rille (270) versehen ist, in die beim Aufrollen der Felgenring (220) partiell hineingedrückt ist, wobei vorzugsweise die eine Rille (270) oder mehrere Rillen (271, 272) umlaufend oder schraubenlinienförmig umlaufend am Umfang des Felgenschulterabschnitts (213) ausgebildet ist/sind.

10. Fahrzeugrad, nach einem der Ansprüche 1 bis 9, **dadurch gekennzeichnet, dass** der Felgenring (20; 120) an dem das am Schüsselrand anliegende Felgenhorn (22; 122) bildenden Ende (22A; 122A) im Wesentlichen normal zur Radachse (11) umgebogen ist und/oder dass die Kontur (7'; 107') des Schüsselrands (7; 107) am Felgenhornabschnitt (12) eine Einbuchtung mit einer vorzugsweise normal zur Radachse (11) ausgerichteten Anlagefläche aufweist.

11. Fahrzeugrad nach einem der Ansprüche 1 bis 10, **dadurch gekennzeichnet, dass** die Druckzone (30; 130) am oder nahe des Übergangs der Tiefbettflanke (26; 126) in den Tiefbettboden (25; 125) des Felgenrings (20; 120) angeordnet ist.

12. Fahrzeugrad nach einem der Ansprüche 1 bis 11, **dadurch gekennzeichnet, dass** der Tiefbettflankenabschnitt (16; 116) an der Radschüssel (1; 101) um etwa 55° bis 65°, vorzugsweise etwa 62° ± 2° zur Radachse (11) abgewinkelt verläuft und/oder die Tiefbettflanke (26; 126) des Felgenrings (20; 120) um wenigstens 2°, vorzugsweise etwa 5° ± 3 ° steiler verläuft als der Tiefbettflankenabschnitt (16; 116).

13. Verfahren zum Herstellen eines Fahrzeugrades aus einer als Gussteil aus Leichtmetall gefertigten Radschüssel (1; 101) und einem Felgenring (20; 120) aus Stahl, mit den Schritten Bereitstellen einer wenigstens ein Felgenhorn, Felgenschulter, ein Felgentiefbett und eine Tiefbettflanke aufweisenden Felgenringvorform (20A; 120A) und Bereitstellen einer Radschüssel (1: 101), die einen vorzugsweise konzentrisch um die Radachse umlaufenden Schüsselrand (7; 107) aufweist, **dadurch gekennzeichnet, dass** die Radschüssel am Schüsselrand eine an den Verlauf von Felgenhorn (22; 122) und Tiefbettflanke (26; 126) angepasste und sich über deren Abstand erstreckende Kontur (7'; 107') aufweist, und dass die Felgenringvorform (20A; 120A) mittels wenigstens eines Aufstauchschritts und/oder eines Aufrollschritts drehfest am Schüsselrand (7; 107) befestigt wird, wobei zum Einklemmen der Radschüssel eine erste Druckzone (30; 130) zwischen Felgenring und Radschüssel an der Tiefbettflanke (26; 126) und eine zweite Druckzone (31; 131) zwischen Felgenring und Radschüssel am Felgenhorn (22; 122) gebildet wird.

14. Verfahren nach Anspruch 13, **dadurch gekennzeichnet, dass** zum Erzeugen der Klemmkraft die Radschüssel zumindest im Felgenschulterabschnitt mit einer Einziehung versehen ist, in die die Felgenschulter (23; 123) des Felgenrings (20; 120) beim Aufstauchen oder Aufrollen zum Ausgleich der auftretenden Rückfederung hineingedrückt wird.

15. herfahren nach Anspruch 13 oder 14, **dadurch gekennzeichnet, dass** das Aufstauchen mittels mehrbackiger Aufstauchwerkzeuge erfolgt, wobei vorzugsweise jede Stauchbacke (50) im Wesentlichen eine Negativform des fertigen Felgenrings aufweist, wobei die Negativform im Bereich der Felgenschulter eine Überstauchung der Felgenringvorform bewirkt.

16. herfahren nach Anspruch 13 oder 14, **dadurch gekennzeichnet, dass** das Aufrollen mittels wenigstens einer Druckrolle erfolgt, wobei vorzugsweise der Anstellwinkel der Druckrolle relativ zur Radachse verstellbar ist und/oder beim Aufrollen zumindest partiell Material des Felgenrings (220) in Rillen (270, 271) im Schüsselrand (207) hineingedrückt wird.

17. Verfahren nach einem der Ansprüche 13 bis 16, **dadurch gekennzeichnet, dass** beim Aufstauchen oder Aufrollen eine Anlagezone am Übergangsabschnitt zwischen Felgenschulter und Tiefbettflanke gebildet wird, wobei vorzugsweise der Felgenring nur an den zwei oder drei Druckzonen und an der Anlagezone in Kontakt mit dem Schüsselrand gedrückt bzw. gestaucht wird.

18. herfahren nach einem der Ansprüche 13 bis 17 oder Fahrzeugrad nach einem der Ansprüche 1 bis 12, **dadurch gekennzeichnet, dass** zwischen dem Stahlfelgenring und der Leichtmetallradschüssel oder zwischen dem Felgenring (20; 120) und der Radschüssel, insbesondere im Bereich der Druckzonen und Anlagezonen, Klebemittel und/oder Dichtmittel eingebracht oder eingesetzt sind.

## Claims

1. A vehicle wheel comprising a wheel disk fabricated as a casting from lightweight metal, with a disk edge running concentrically around the wheel axis and a rim ring (20; 120) fabricated from steel, rotationally locked to the wheel disk (1; 101) and having at least one rim flange (22; 122), one bead seat (23; 123), a drop center well base (25; 125) and a well base edge (26; 126), **characterized in that** the wheel disk (1; 101) at the disk edge (7; 107) has a contour (7'; 107') which is adapted to the profile of the rim flange (22; 122) and the well base edge (26; 126) and extends over the interval between them, and against which contour the rim ring (20; 120) bears when the wheel disk and the rim ring are in the assembled state, clamping the wheel disk (1; 101) between a first pressure zone (30; 130) on the well base edge (26; 126) and a second pressure zone (31; 131) on the rim flange (22; 122).

2. The vehicle wheel as claimed in claim 1, **characterized in that** a contact zone (32; 132) is formed between the two pressure zones (30, 31; 130, 131) at the transition of the well base edge to the bead seat.

3. The vehicle wheel as claimed in claim 2, **characterized in that** the contact zones (32; 132) are formed by means of a security hump (24; 124) on the rim ring and a circumferential stay cam (14; 114) on the disk edge (7; 107) bearing on the inside thereof, wherein preferably, in the assembled state achieved between the bearing zone (32) on the security hump (14) and the second pressure zone (31) on the rim flange (22), no direct contact areas exist between the rim ring (20) and the disk edge (7).

4. The vehicle wheel as claimed in claim 2 or 3, **characterized in that** the rim ring (20; 120) at the contact zone (32; 132) is braced against the disk edge (7; 107) substantially only in a radial direction.

5. The vehicle wheel as claimed in one of claims 1 to 4, **characterized in that** the rim ring (20; 120; 220) is clamped to the wheel disk (1; 101; 201) by upsetting and/or rolling over at the disk edge (7; 107; 207).

6. The vehicle wheel as claimed in one of claims 1 to 5, **characterized in that** the rim ring (120) and the contour (107') of the disk edge (107) have transitional sections (119; 129) at the transition of the rim flange (122) into the bead seat (123) where a third pressure zone (133) is formed, in order to produce a clamping both between the first and third pressure zones (130; 133) and also between the second and the third pressure zones (131; 133).

7. The vehicle wheel as claimed in one of claims 1 to 5, **characterized in that** the rim ring (20) and the contour (7') of the disk edge (7) have transitional sections (19; 29) at the transition of the rim flange (22) into the bead seat (23), which are oriented perpendicularly to the wheel axis (11) or have an angling of >90°.

8. The vehicle wheel as claimed in one of claims 1 to 7, **characterized in that** the contour (7'; 107') of the disk edge against the bead seat section (13; 113) has a reduction, which in the assembled state preferably has the greatest interval from the rim ring (20; 120), and/or that in the assembled state the inside of the rim ring (20'; 120') is separated from the disk edge (7; 107) by a gap between the pressure and contact zones (30, 31, 32, 33; 130, 131, 132, 133).

9. The vehicle wheel as claimed in one of claims 1 to 7, **characterized in that** the contour (207') of the disk edge (207) against the bead seat section (213) is provided with at least one circumferential channel (270), into which the rim ring (220) is partially pressed during the rollover process, wherein preferably the one channel (270) or multiple channels (271, 272) is/are formed to run circumferentially or helically around the circumference of the bead seat section (213).

10. The vehicle wheel as claimed in one of claims 1 to 9, **characterized in that** the rim ring (20; 120), at the end (22A; 122A) that forms the rim flange (22; 122) bearing on the disk edge, is bent over substantially perpendicularly to the wheel axis (11) and/or that the contour (7'; 107') of the disk edge (7; 107) on the rim flange section (12) has an indentation with a contact face oriented preferably perpendicularly to the wheel axis (11).

11. The vehicle wheel as claimed in one of claims 1 to 10, **characterized in that** the pressure zone (30; 130) is arranged at or close to the transition of the well base edge (26; 126) into the well base floor (25; 125) of the rim ring (20; 120).

12. The vehicle wheel as claimed in one of claims 1 to 11, **characterized in that** the well base edge section (16; 116) on the wheel disk (1; 101) runs at an angle of approximately 55° to 65°, preferably approximately 62° ± 2° to the wheel axis (11) and/or the well base edge (26; 126) of the rim ring (20; 120) preferably runs at an at least 2°, preferably approximately 5° ± 3° steeper angle than well base edge section (16; 116).

13. A method for manufacturing a vehicle wheel from a wheel disk (1; 101) fabricated as a casting from lightweight metal, and a rim ring (20; 120) of steel, in operations entailing the provision of a rim ring preform (20A; 120A) having at least one rim flange, a bead seat, a drop center rim well base and a well base edge, and the provision of a wheel disk (1; 101), which has a disk edge (7; 107) running concentrically around the wheel axis, **characterized in that** the wheel disk at the disk edge has a contour (7'; 107') matched to the profile of the rim flange (22; 122) and the well base edge (26; 126) and extending over the distance between them, and that the rim ring preform (20A; 120A) is fixed, rotationally locked to the disk edge (7; 107), by means of at least one upsetting operation and/or one rollover operation, a first pressure zone (30; 130) being formed between the rim ring and the wheel disk at the well base edge (26; 126) and at a second pressure zone (31; 131) being formed between the rim ring and the wheel disk at the rim flange (22; 122) for clamping the wheel disk.

14. The method as claimed in claim 13, **characterized in that** in order to generate the clamping force, the wheel disk is provided, at least in the bead seat section, with a reduction, into which the bead seat (23; 123) of the rim ring (20: 120) is pressed in the upsetting or rollover process to compensate for the rebound occurring.

15. The method as claimed in claim 13 or 14, **characterized in that** the upsetting is performed by means of multi-jaw upsetting tools, each upsetting jaw (50) preferably having a shape which is substantially a negative shape of the finished rim ring, the negative shape in the area of the bead seat over-upsetting the rim ring preform.

16. The method as claimed in claim 13 or 14, **characterized in that** the rolling over is performed by means of at least one pressure roller, the setting angle of the pressure roller being adjustable relative to the wheel axis, and/or that in the rollover process material of the rim ring (220) is at least partially pressed into channels (270, 271) in the disk edge (207).

17. The method as claimed in one of claims 13 to 16, **characterized in that** the in the upsetting or rollover process a contact zone is formed at the transitional section between the bead seat and the well base edge, the rim ring preferably being upset or pressed into contact with the disk edge only at the two or three pressure zones and at the contact zone.

18. The method as claimed in one of claims 13 to 17 or the wheel as claimed in any of claims 1 to 12, **characterized in that** adhesives and/or sealants are introduced between the steel rim ring and the lightweight metal wheel disk, or between the rim ring (20; 120) and the wheel disk, especially in the area of the pressure zones and/or contact zones.

## Revendications

1. Roue de véhicule consistant en un disque de roue fabriqué en métal léger en tant que pièce moulée comprenant un bord de disque entourant concentriquement l'axe de roue, et un anneau de jante (20 ; 120) fabriqué en acier, solidaire en rotation du disque de roue (1 ; 101), présentant au moins un rebord de jante (22 ; 122), un épaulement de jante (23 ; 123), une gorge de jante (25 ; 125) et un flanc de gorge (26 ; 126), **caractérisée en ce que** le disque de roue (1 ; 101) présente sur le bord de disque (7 ; 107) un contour (7' ; 107') adapté au tracé du rebord de jante (22 ; 122) et du flanc de gorge (26 ; 126) et s'étendant sur leur écartement, et l'anneau de jante (20 ; 120) est appliqué sur ce contour à l'état assemblé du disque de roue et de l'anneau de jante avec serrage du disque de roue (1 ; 101) entre une première zone de pression (30 ; 130) sur le flanc de gorge (26 ; 126) et une deuxième zone de pression (31 ; 131) sur le rebord de jante (22 ; 122).

2. Roue de véhicule selon la revendication 1, **caractérisée en ce qu'**entre les deux zones de pression (30, 31 ; 130, 131) est formée une zone d'application (32 ; 132) à la jonction du flanc de gorge vers l'épaulement de jante.

3. Roue de véhicule selon la revendication 2, **caractérisée en ce que** la zone d'application (32 ; 123) est formée au moyen d'un bourrelet de sécurité (24 ; 124) sur l'anneau de jante et d'un bossage de soutien (14 ; 114) périphérique sur le bord de disque (7 ; 107), lequel bossage est appliqué sur la face intérieure du bourrelet, et il n'y a de préférence, à l'état assemblé, entre la zone d'application (32) sur le bourrelet de sécurité (14) et la deuxième zone de pression (31) sur le rebord de jante (22), aucune surface de contact direct entre anneau de jante (20) et bord de disque (7).

4. Roue de véhicule selon la revendication 2 ou 3, **caractérisée en ce que** dans la zone d'application (32 ; 132) l'anneau de jante (20 ; 120) ne s'appuie sur le bord de disque (7 ; 107) pour l'essentiel qu'en direction radiale.

5. Roue de véhicule selon l'une des revendications 1 à 4, **caractérisée en ce que** l'anneau de jante (20 ; 120 ; 220) est serré par refoulage et/ou galetage sur le bord de disque (7 ; 107 ; 207) du disque de roue (1 ; 101 ; 201).

6. Roue de véhicule selon l'une des revendications 1 à 5, **caractérisée en ce qu'**à la jonction du rebord de jante (122) avec l'épaulement de jante (123), l'anneau de jante (120) et le contour (107') du bord de disque (107) présentent des tronçons de jonction (119 ; 129), sur lesquels est formée une troisième zone de pression (133) pour provoquer un serrage aussi bien entre la première et la troisième zone de pression (130 ; 133) qu'entre la deuxième et la troisième zone de pression (131 ; 133).

7. Roue de véhicule selon l'une des revendications 1 à 5, **caractérisée en ce qu'**à la jonction du rebord de jante (22) avec l'épaulement de jante (23), l'anneau de jante (20) et le contour (7') du bord de disque (7) présentent des tronçons de jonction (19 ; 29), qui sont orientés perpendiculaires à l'axe de roue (11) ou présentent une déviation angulaire >90°.

8. Roue de véhicule selon l'une des revendications 1 à 7, **caractérisée en ce que** le contour (7' ; 107') du bord de disque présente sur le tronçon d'épaulement de jante (13 ; 113) un retrait qui de préférence présente à l'état assemblé le plus grand écart par rapport à l'anneau de jante (20 ; 120) et/ou **en ce qu'**entre les zones de pression et d'application (30, 31, 32, 33 ; 130, 131, 132, 133), la face intérieure de l'anneau (20' ; 120') est, à l'état assemblé, espacée du bord de disque (7 ; 107) par une fente.

9. Roue de véhicule selon l'une des revendications 1 à 7, **caractérisée en ce que** le contour (207') du bord de disque (207) comporte dans le tronçon d'épaulement de jante (213) au moins une rainure (270) périphérique dans laquelle l'anneau de jante (220) est partiellement enfoncé lors du galetage, et de préférence ladite rainure (270) ou plusieurs rainures (271, 272) est/sont formée(s) périphérique(s) ou périphériques(s) en forme d'hélice sur le pourtour du tronçon d'épaulement de jante (213).

10. Roue de véhicule selon l'une des revendications 1 à 9, **caractérisée en ce que** l'anneau de jante (20 ; 120) est recourbé sensiblement perpendiculairement à l'axe de roue (11) sur l'extrémité (22A ; 122A) formant le rebord de jante (22 ; 122) appliqué sur le bord de disque et/ou **en ce que** le contour (7' ; 107') du bord de disque (7 ; 107) présente sur le tronçon de rebord de jante (12) un creux comprenant une surface d'application orientée de préférence perpendiculairement à l'axe de roue (11).

11. Roue de véhicule selon l'une des revendications 1 à 10, **caractérisée en ce que** la zone de pression (30 ; 130) est agencée sur ou à proximité de la jonction du flanc de gorge (26 ; 126) avec la gorge de jante (25 ; 125) de l'anneau de jante (20 ; 120).

12. Roue de véhicule selon l'une des revendications 1 à 11, **caractérisée en ce que** le tronçon de flanc de gorge (16 ; 116) s'étend sur le disque de roue (1 ; 101) sous un angle d'environ 55° à 65°, de préférence environ 62° ± 2° par rapport à l'axe de roue (11), et/ou le flanc de gorge (26 ; 126) de l'anneau de jante (20 ; 120) est plus abrupt que le tronçon de flanc de gorge (16 ; 116) d'au moins 2°, de préférence environ 5° ± 3°.

13. Procédé de fabrication d'une roue de véhicule consistant en un disque de roue (1 ; 101) fabriqué en métal léger en tant que pièce moulée, et un anneau de jante (20 ; 120) en acier, comprenant les étapes de préparation d'une préforme d'anneau de jante (20A ; 120A) présentant au moins un rebord de jante, un épaulement de jante, une gorge de jante et un flanc de gorge, et de préparation d'un disque de roue (1 ; 101) qui présente un bord de disque (7 ; 107) entourant de préférence concentriquement l'axe de roue, **caractérisé en ce que** le disque de roue présente sur le bord de disque un contour (7' ; 107') adapté au tracé du rebord de jante (22 ; 122) et du flanc de gorge (26 ; 126) et s'étendant sur leur écartement, et **en ce que** l'on fixe solidaire en rotation la préforme d'anneau de jante (20A ; 120A) au bord de disque (7 ; 107) au moyen d'au moins une étape de refoulage et/ou une étape de galetage, et une première (30 ; 130) et une deuxième (31 ; 131) zone de pression entre anneau de jante et disque de roue sont formées respectivement sur le flanc de gorge (26 ; 126) et sur le rebord de jante (22 ; 122) pour enserrer le disque de roue.

14. Procédé selon la revendication 13, **caractérisé en ce que** pour produire la force de serrage, le disque de roue comporte au moins dans le tronçon d'épaulement de jante, un retrait dans lequel l'épaulement de jante (23 ; 123) de l'anneau de jante (20 ; 120) est enfoncé lors du refoulage et/ou du galetage pour compenser le retour élastique qui survient.

15. Procédé selon la revendication 13 ou 14, **caractérisé en ce que** le refoulage s'effectue au moyen d'outillages de refoulage à mâchoires multiples, et de préférence chaque mâchoire de refoulage (50) présente sensiblement une forme en négatif de l'anneau de jante achevé, la forme en négatif dans la région de l'épaulement de jante provoquant un sur-refoulement de la préforme d'anneau de jante.

16. Procédé selon la revendication 13 ou 14, **caractérisé en ce que** le galetage s'effectue au moyen d'au moins un galet presseur, l'angle de calage du galet presseur est de préférence réglable par rapport à l'axe de roue et/ou lors du galetage, du matériau de l'anneau de jante (220) est au moins partiellement enfoncé dans des rainures (270 ; 271) dans le bord de disque (207).

17. Procédé selon l'une des revendications 13 à 16, **caractérisé en ce que** lors du refoulage ou du galetage, on forme une zone d'application sur le tronçon de jonction entre épaulement de jante et flanc de gorge, l'anneau de jante étant refoulé respectivement pressé en contact avec le bord de disque de préférence uniquement sur les deux ou trois zones de pression et sur la zone d'application.

18. Procédé selon l'une des revendications 13 à 17 ou roue de véhicule selon l'une des revendications 1 à 12, **caractérisé en ce que** des moyens de collage et/ou des moyens de colmatage sont déposés ou introduits entre l'anneau de jante en acier et le disque de roue en métal léger ou entre l'anneau de jante (20 ; 120) et le disque de roue, en particulier dans la région des zones de pression et zones d'application.
